(19) **Europäisches Patentamt / European Patent Office / Office européen des brevets**

(11) **EP 3 380 213 B1**

(12) **EUROPEAN PATENT SPECIFICATION**

(45) Date of publication and mention
of the grant of the patent:
**03.07.2019 Bulletin 2019/27**

(21) Application number: **16804854.4**

(22) Date of filing: **23.11.2016**

(51) Int Cl.:
***B01D 39/20*** (2006.01)

(86) International application number:
**PCT/GB2016/053671**

(87) International publication number:
**WO 2017/089789 (01.06.2017 Gazette 2017/22)**

(54) **FILTRATION MATERIAL AND METHOD OF MANUFACTURE THEREOF**

FILTERMATERIAL UND HERSTELLUNGSVERFAHREN

MATÉRIAU DE FILTRATION ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.11.2015 GB 201520964**

(43) Date of publication of application:
**03.10.2018 Bulletin 2018/40**

(73) Proprietor: **Porvair Filtration Group Limited
Hampshire PO15 5RT (GB)**

(72) Inventor: **BEVIS, Andrew Spencer
Bournemouth
Dorset (GB)**

(74) Representative: **D Young & Co LLP
120 Holborn
London EC1N 2DY (GB)**

(56) References cited:
**EP-A2- 2 905 374          WO-A2-2012/047945
GB-A- 2 394 428          US-A- 5 789 024
US-A1- 2015 306 549**

## Description

## Field of the Invention

This invention relates to a filtration material. It also relates to a method of manufacturing the filtration material, filter elements and filter units comprising the filtration material, and filtration methods using the filtration material.

## Background to the Invention

Filtration material, and filter elements and filter units comprising such material (referred to generally in this section as "filter") are used to prevent the progression of solid and gelatinous contaminants to process systems where they will damage or inhibit the process operation or will lead to unacceptable emissions from the process. In capturing the contaminants the filter will undergo a change whereby the contaminants which are in the body or on the surface of the filter will cause an increase in the differential pressure across the filter or alternatively a reduction in the ability of the filter to pass the flow of the fluid. This can progress until such time as the filter will need to be changed or cleaned.

In many processing applications the filters are cleaned *in situ* using fluidic methods that cause the accumulated contaminants to be removed from the filter and to be transported to another (generally quiescent) region of the filter containment for discharge/settled storage so that the differential pressure or flow can be recovered to a degree that permits the process to continue operating at an acceptable level. This is most common in applications where the concentration of contaminant present is such that, without *in situ* cleaning, the filters would be rendered unusable within a matter of hours or even minutes. This cleaning can be achieved through reversing the flow of the fluid, typically by controlled backflushing, pulsed high intensity/velocity flow or the application of multiple phase fluids.

Typically, when the filter is cleaned there is only partial recovery of the differential pressure or flow due a degree of retention of residual contaminant in or on the filter. This is generally accepted as an operating limitation and the process control is set up to operate under these conditions resulting in a condition of gradual increase of differential pressure or reduction in flow over the course of time until such time that the residual contaminant impacted differential pressure or flow has reached a position that the *in situ* recovery is now insufficient to continue operating.

Once the operation has been stopped the filter may be cleaned either within its containment or more commonly is removed from the containment to be cleaned *ex situ.* The external cleaning is performed using suitable and available mechanical and chemical methods to achieve an appropriate level of recovery of the filter condition (generally measured by permeability) to permit its reinstallation for use.

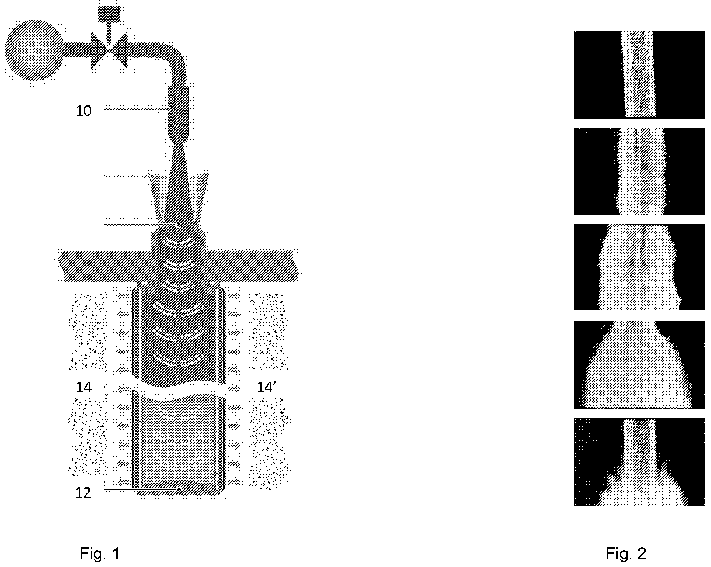

One method known in the art for *in situ* cleaning of filter elements is a pulse jet blowdown. As shown in Fig. 1, a pulsejet blowdown typically comprises release of a high pressure supply of gas (typically a minimum of double the process pressure) causing a jet to occur at a nozzle 10 positioned above the filter element 12, with the nozzle size and positioning determined through specific sizing and modelling to suit the process duty. As shown in Figs. 1 and 2, the jet pulse is transported from the nozzle 10 to the inside diameter of the filter element 12: this effectively halts the flow of the gas out of the filter element temporarily, and causes a pressure wave in the reverse direction. As the only exit is through the filter media, this causes at least part of the accumulated solids on the filter element to be driven away from the filter element in a direction 14, 14' to a distance where they agglomerate and settle.

One of the limitations with both *in situ* cleaning and *ex situ* cleaning is the extent to which the filter can be cleaned. This can be the result of a number of factors, for example due to some contaminants having significant properties of adhesion and cohesion, and also the complexity of the filter itself reducing the efficacy of the cleaning energy applied.

It would therefore be desirable to provide a filtration material to which contaminants adhere less strongly and therefore from which the contaminants can be removed more easily by cleaning.

Chemical vapour deposition (CVD) is a chemical process used to modify the surface of a range of solid materials. In typical CVD, the material to be surface modified is exposed to one or more volatile precursors containing the atoms or molecular fragments desired to form the surface modification, which react and/or decompose on the surface of the material to produce the desired surface modification.

Chemical vapour deposition methods based on organosilane starting materials are described in WO 2011/056550 and WO 2012/047945. In particular, WO 2012/047945 describes a CVD method using a difunctional organosilane followed by a trifunctional organosilane. However, in both of these documents, the aim of the surface modification is to improve the wear resistance of the material on which the organosilane fragments are deposited. Neither WO 2011/056550 nor WO 2012/047945 anywhere disclose or suggest that applying such a method to a filtration material may improve the cleanability or resistance to fouling of the filtration material.

GB 2394428A describes a metallic filtration material having a surface modification (referred to therein as a "protective coating") applied thereto via chemical vapour deposition. In particular, this document specifically describes the application of a silica coating to a metallic filtration material. Although not explicitly stated therein, the CVD method exemplified in this publication uses silane ($SiH_4$) as the volatile precursor which comprises the source of silicon atoms: this is then decomposed (wholly or partially) in the presence of air to form silica which forms the surface modification. However, this document does not disclose a filtration material in which the atoms forming the surface modification comprise carbon and hydrogen in addition to silicon, nor a CVD process which uses an organic derivative of silane as the volatile precursor.

Moreover, the surface modification described in GB 2394428A produces an oxidised surface which is polar and therefore has a high surface energy. It is only capable of protecting the filtration material in aqueous conditions at acidic pH.

US 2015/0306549 describes a thin film semipermeable gas separation membrane which is plasma deposited from liquid organosiloxane monomer. In contrast to the filtration material of the present invention, the use of an organosiloxane monomer in the CVD process results in the surface modification of the material comprising silicon and hydrogen, but not carbon. Moreover, as such semipermeable gas separation membranes rely upon either diffusion or molecular sieving to effect the separation, the pore size of the primary surface layer will typically be in the range 1 to 10nm or 0.2 to 2 nm.

US 5789024 also describes a composite membrane for the separation of gases having a film comprising predominantly silicon dioxide deposited via chemical vapour deposition, within the walls of mesoporous borosilicate glass or other metal oxide compositions. The average pore size in the region of the deposited film is less than 0.8 nm, and preferably in the range 0.3 to 0.5 nm.

JP 61-149210A describes a gas permselective composite membrane having an organosilane having a saturated hydrocarbon group and ethylene or acetylene applied to the surface of a polymer support by plasma polymerisation under glow discharge.

In contrast to the filtration materials of the present invention, which is to separate a solid from a fluid, the purpose of the membranes described in the above-mentioned documents is for separating one gas from another. The separation which occurs through such membranes typically occurs by diffusion. Consequently, the pore diameter in such gas separation membranes is typically in the order of 0.1 to 10 nm - much smaller than the surface modified filtration materials of the present invention, as defined below which typically range from 0.1 $\mu$m to 100 $\mu$m.

The chemical vapour deposition processes described in the above documents form the gas separation membranes of the prior art at the molecular level and modify the separation properties of the membrane. However, as gas separation membranes do not suffer from blockage or require cleaning to remove particulate material therefrom, the problem which the surface modified filtration materials of the present invention addresses is not applicable to such membranes.

## Summary of the Invention

In one aspect of the invention, there is provided a filtration material wherein at least one surface thereof is modified, wherein the atoms defining the surface modification comprise silicon, carbon and hydrogen, the filtration material having a pore diameter from 0.1 $\mu$m to 100 $\mu$m, wherein the filtration material is metallic or ceramic. In another aspect of the invention, there is provided a filtration material, as defined above, wherein at least one surface thereof is modified, wherein the atoms defining the surface modification comprise silicon, carbon, hydrogen and oxygen.

In one aspect, there is provided a filtration material, as defined above, having one or more surface modifications, the one or more surface modifications comprising constituents of one or more decomposed organosilanes. In one embodiment, there is provided a filtration material, as defined above, having the above surface modification, wherein the modified surface has been subjected to oxidation.

In one aspect, there is provided a filtration material, as defined above, having a first and a second surface modification, the first surface modification comprising constituents of a decomposed difunctional organosilane and the second surface modification comprising constituents of a decomposed trifunctional organosilane.

In one embodiment, there is provided a filtration material, as defined above, having the above surface modification, wherein the modified surface has been subjected to oxidation. In one embodiment the oxidation takes place after the first surface modification, but before the second surface modification.

In another aspect of the invention, there is provided a method of modifying at least one surface of a filtration material, as defined above, by chemical vapour deposition, the chemical vapour deposition comprising decomposition of one or more organosilanes such that the surface modification comprises components of the decomposed organosilanes, such that the atoms defining the surface modification comprise silicon, carbon, and hydrogen.

In another aspect of the invention, there is provided a method of modifying at least one surface of a filtration material, as defined above, the method comprising:

(a) a first modification of the at least one surface of the filtration material by chemical vapour deposition comprising decomposition of a difunctional organosilane; and
(b) a second modification of the at least one surface of the filtration material modified in step (a) by chemical vapour deposition comprising decomposition of a trifunctional organosilane.

In one embodiment the above method further comprises:

(a1) oxidising the at least one surface of the filtration material modified in step (a).

In a further aspect of the invention, there is provided a method of manufacturing a surface modified filtration material, the atoms defining the surface modification comprising silicon, carbon and hydrogen, the method comprising:

(a) forming a filtration material; and
(b) modifying the surface of the filtration material according to a method defined herein.

In another aspect of the invention, there is provided a filtration material obtained and/or obtainable by any of the above-mentioned methods.
In a still further aspect of the invention, there is provided a filter element comprising the filtration material as defined herein. Typical filter elements include a cartridge, a screen, a sheet, a frit or a disc.
In a yet further aspect of the invention, there is provided a filter unit comprising a filter element as defined herein and a supporting structure.
In a still further aspect of the invention, there is provided a method of filtering a fluid, comprising passing the fluid through a filtration material, a filter element or a filter unit as defined herein.
In a yet further aspect of the invention, there is provided use of a filtration material as defined herein in filtration.

**Brief Description of the Drawings**

Fig. 1 illustrates generally the process of pulse jet cleaning of filter elements;
Fig. 2 illustrates the effect of the pulse jet in removing contaminants from filter elements;
Fig. 3 illustrates the differential pressure / unit flow as a function of time (in hours of operation) for filter elements having their surface modified according to the present invention in comparison with untreated filter elements, after *in situ* cleaning;
Fig. 4 illustrates the differential pressure as a function of air flow rate for contaminated filter elements having their surface modified according to the present invention in comparison with untreated filter elements and unused filter elements;
Fig. 5 illustrates the differential pressure as a function of air flow rate for filter elements having their surface modified according to the present invention in comparison with untreated filter elements, after *ex situ* cleaning, and unused filter elements; and
Fig. 6 is a continuation of the data presented in Fig. 3, illustrating the differential pressure / unit flow as a function of time up to 12,000 hours of operation.

**Detailed Description**

**Filtration Material**

In one aspect of the invention, there is provided a filtration material wherein at least one surface thereof is modified, wherein the atoms defining the surface modification comprise silicon, carbon and hydrogen, the filtration material having a pore diameter from 0.1 $\mu$m to 100 $\mu$m, wherein the filtration material is metallic or ceramic.
In this specification the term "filtration material" (or "filtration medium") means a material capable of separating a solid from a fluid. As is known to the person skilled in the art, passing a fluid containing solid contaminants through a filtration material allows solid particles to be retained on the filtration material while the fluid (filtrate) passes through the filtration material. In contrast, the purpose of the gas separation membranes of the prior art documents is for separating one gas from another.
The pore diameter of the filtration material may vary depending on the intended application. The pore diameter is at least 100 nm. In one embodiment, the pore diameter is at least 200 nm. In one embodiment, the pore diameter is at least 500 nm. In one embodiment, the pore diameter is at least 1 $\mu$m. The pore diameter is at most 100 $\mu$m. In one embodiment, the pore diameter is at most 50 $\mu$m. In one embodiment, the pore diameter is at most 20 $\mu$m. In one embodiment, the pore diameter is at most 10 $\mu$m.
The pore diameter is from 100 nm to 100 $\mu$m. In one embodiment, the pore diameter is from 200 nm to 50 $\mu$m. In one embodiment, the pore diameter is from 500 nm to 20 $\mu$m. In one embodiment, the pore diameter is from 1 $\mu$m to 10 $\mu$m. The pore diameter of the filtration material is measured using the bubble point test in accordance with ISO4003.
It has been surprisingly found by the present inventors that when a surface modification including carbon and hydrogen atoms in addition to silicon is applied to at least one surface of a filtration material, particularly a metallic filtration material, its surface energy is reduced to such a degree that the adhesion forces between the contaminant and the surface of the filtration material are also greatly reduced. This lessens the extent to which contaminants bind to the filtration material and makes either *in situ* or *ex situ* cleaning of the filtration material or filter elements or filter units containing it to remove contaminants from it much easier and more efficient. The reduction in surface energy achieved by the surface modification of the filtration material according to the invention permits this low adherence to be applicable to a wide range of contaminant chemistries.
The surface modification of the present invention is non-polar and, surprisingly, has a much lower surface energy than the filtration material described in GB 2394428A. Unexpectedly, the filtration material of the present invention has a resistance to fouling which is significantly improved compared with the material described in GB 2394428A, thereby making the filtration material much easier to clean either *ex situ* or *in situ* compared with the material described therein. It has also been surprisingly found that the surface modification of the present invention is able to protect the filtration material at a full range of aqueous based pH. The material is both acid and alkaline resistant.

In particular, it has been surprisingly found that the filtration material of the present invention is able to resist fouling at high temperatures (around 350°C) at which gasification plants typically operate, as well as in typical conditions (aqueous alkali, typically around 60°C) at which the filtration material is cleaned.

The extent to which the reduced surface energy conferred by the surface modification has upon the adherence of a solid particle could not have been predicted from the art, as such particles are documented to be very abrasive in the operating environment and also have a high degree of adhesion to many types of filter elements, both thin filter media such as screens and sheets and more complex matrix filter media such as cartridges and frits. In particular, when the filtration material is used in the filtration of char and catalyst dust, both which have been subject to elevated temperatures, the ability of the contaminant to be retained by the filter media is evidenced in the continuing development of differential pressure even in the presence of *in situ* cleaning, as described herein.

In contrast to the organosilane-modified gas separation membranes described in the prior art, the organosilane surface modification applied to the filtration material of the present invention improves the resistance to fouling and cleanability of the material without substantial modification of the internal pore structure of the filtration material and without substantial modification of the separation properties of the filtration material.

It has also been found that, particularly when the modification is applied to the surface of a complex filter, typically both external and internal surfaces are modified. a mechanical key forms between the surface modification elements and the original filtration material. In addition, the surface modification of filtration materials provides enhanced corrosion protection to the material so the surface finish will be retained for longer.

While not wishing to be bound by theory, it is believed that the adhesivity between the contaminant solid particle and the filter media surface (especially when the filter medium is a metallic filtration medium) may be at a molecular level, especially when the filtration material is in the form of wire and fibre or similar materials manufactured by drawing techniques. While not wishing to be bound by theory, it is also believed that the adhesivity may also be a function of the surface characteristics of the contaminant which at the molecular level will still be reactive and potentially mobile with different elements, oxides and compounds presenting at the interface between the contaminant particles and the filtration material.

The filtration material is metallic or ceramic.

In one embodiment, the filtration material is metallic. The surface modification of filtration materials according to the invention is particularly suitable for metallic filters which have a very high surface energy and for which the reduction in surface energy, and the benefits regarding reduced adhesion conferred thereby, are greatest.

The metal used to form the filtration medium is not particularly limited provided it has a surface capable of reacting with the products of decomposition of an organosilane to generate a stable chemical bond on the surface. The metal may be a pure metal or an alloy.

In one embodiment, the metal is a pure metal. Examples of pure metals include a transition metal such as scandium, titanium, vanadium, chromium, manganese, iron, cobalt, yttrium, zirconium, niobium, molybdenum, technetium, ruthenium, rhodium, palladium, cadmium, hafnium, tantalum, tungsten, rhenium, osmium, iridium, platinum; a lanthanide, such as lanthanum, cerium, praseodymium, neodymium, promethium, samarium, europium, gadolinium, terbium, dysprosium, holmium, erbium, thulium, ytterbium and lutetium; or a p-block metal such as aluminium, gallium, indium, or tin.

In one embodiment, the metal is an alloy. In one embodiment the alloy comprises iron and chromium. In one embodiment the alloy comprises iron, chromium and nickel. In one embodiment the alloy comprises iron, chromium and aluminium. In one embodiment the alloy comprises iron, chromium, nickel and aluminium. In one embodiment the alloy comprises iron, chromium, nickel and manganese. In one embodiment the alloy comprises iron, chromium, nickel and molybdenum. In one embodiment the alloy comprises iron, chromium, nickel, molybdenum and cobalt.

When the alloy contains iron, the iron typically comprises at least 0.5%, such as at least 1%, such as at least 1.5%, such as at least 2%, such as at least 3%, such as at least 5%, such as at least 10%, such as at least 15%, such as at least 20%, such as at least 25%, such as at least 30%, such as at least 35%, such as at least 40%, such as at least 45%, such as at least 50%, such as at least 55%, such as at least 60%, such as at least 65%, such as at least 70%, of the alloy. The iron typically comprises up to 95%, such as up to 90%, such as up to 80%, such as up to 75%, such as up to 70%, such as up to 65%, such as up to 60%, such as up to 55%, such as up to 50%, such as up to 45%, such as up to 40%, such as up to 35%, such as up to 30%, such as up to 25%, such as up to 20%, such as up to 15%, such as up to 10%, such as up to 5%, such as up to 3%, such as up to 2% of the alloy. These percentages are expressed by weight of the total weight of the alloy.

When the alloy contains nickel, the nickel typically comprises at least at least 20%, such as at least 25%, such as at least 30%, such as at least 35%, such as at least 40%, such as at least 45%, such as at least 50%, such as at least 55%, such as at least 60%, such as at least 65%, such as at least 70%, of the alloy. The nickel typically comprises up to 75%, such as up to 70%, such as up to 65%, such as up to 60%, such as up to 55%, such as up to 50%, such as up to 45%, such as up to 40%, such as up to 35% of the alloy. These percentages are expressed by weight of the total weight of the alloy.

When the alloy contains chromium, the chromium typically comprises at least 15%, such as at least 20%, such as at least 25%, of the alloy. The chromium typically comprises up to 35%, such as up to 30%, such as up to 25% of the alloy. These percentages are expressed by weight of the total weight of the alloy.

When the alloy contains molybdenum, the molybdenum typically comprises at least 0.5%, such as at least 1%, such as at least 1.5%, such as at least 2%, such as at least 3%, such as at least 5%, such as at least 10% of the alloy. The molybdenum typically comprises up to 20%, such as up to 15%, such as up to 10%, such as up to 5%, such as up to 3%, such as up to 2% of the alloy. These percentages are expressed by weight of the total weight of the alloy.

When the alloy contains cobalt, the cobalt typically comprises at least 0.5%, such as at least 1%, such as at least 1.5%, such as at least 2%, such as at least 3%, such as at least 5%, such as at least 10%, such as at least 15%, such as at least 20%, such as at least 25% of the alloy. The cobalt typically comprises up to 30%, such as up to 25%, such as up to 20%, such as up to 15%, such as up to 10%, such as up to 5%, such as up to 3%, such as up to 2% of the alloy. These percentages are expressed by weight of the total weight of the alloy.

When the alloy contains aluminium, the aluminium typically comprises at least 0.5%, such as at least 1%, such as at least 1.5%, such as at least 2%, such as at least 3%, such as at least 5%, of the alloy. The aluminium typically comprises up to 10%, such as up to 5%, such as up to 3%, such as up to 2% of the alloy. These percentages are expressed by weight of the total weight of the alloy.

When the alloy contains manganese, the manganese typically comprises at least 0.5%, such as at least 1%, of the alloy. The manganese typically comprises up to 3%, such as up to 2% of the alloy. These percentages are expressed by weight of the total weight of the alloy.

Examples of specific metallic alloys used in the manufacture of filters include the following, the chemical composition generally as maxima and expressed in % by weight of the total weight of the alloy.

Haynes Hastelloy® X (Ni 47%/Cr 22%/Fe 18%/Mo 9%/Co 1.5%);
Haynes Hastelloy® C276 (Ni 57%/Cr 16%/Fe 5%/Mo 16%/Co 16%/W 4%);
Haynes Hastelloy® C22 (Ni 56%/Cr 22%/Fe 3%/Mo 13%/Co 2.5%/W 3%);
Haynes Alloy HR160™ (Ni 37%/Cr 28%/Fe 2%/Mo 1%/Co 29%/W 1%/Si 2.75%);
Alloy 59™ (Ni 56.5%/Cr 24%/Fe 1.5%/Mo 16.5%/Co+Mn+Al 1.2%);
Special Metals Inconel™ 600 (Ni 72%/Cr 17%/Fe 10%/Mn 1%);
Special Metals Inconel™ 601 (Ni 63%/Cr 25%/Fe 10%/Mn 1%/Al 1.7%/Cu 1%);
Special Metals Inconel™ 625 (Ni 58%/Cr 23%/Fe 5%/Mo 10%/Co 1%/Nb+Ta 4.15%);
Special Metals Inconel™ 800 (Ni 35%/Cr 23%/Fe 39.5%/Al+Ti 1.2%);
Fecralloy™ (Cr 22%/Fe 72.8%/Al 5%, also including lanthanides and/or Y); or
Fecral (Cr 22%/Fe 70%/Al 6.5%, also including lanthanides, and/or Y+Hf).

The metallic filtration material may be in any metallic physical form. For example, the metallic filtration media may comprise metal fibres, metallic woven mesh, metal powder or any combination thereof. Metal fibres suitably have an average fibre diameter in the range of 1-40μm and a form that may be circular in cross section but can also be of an irregular cross section. Woven mesh suitably has an average wire diameter in the range of 10 - 300 μm and is various different weave patterns from complex Dutch twills to plain weave. Metal powder suitably has a grain diameter in the range of 50 to 600 μm and ranges from broadly spherical to oval in shape.

In another one embodiment, the filtration material comprises a ceramic material. Typical ceramic materials utilised in the construction of ceramic filter elements include silicon dioxide ($SiO_2$), aluminium oxide ($Al_2O_3$), zirconium oxide ($ZrO_2$), iron oxide ($Fe_2O_3$), titanium dioxide ($TiO_2$), calcium oxide (CaO), and magnesium oxide (MgO) or a combination of two or more of these materials (particularly a combination of iron oxide and titanium oxide). The ceramic material may be in any suitable physical form, examples of which include fibrous, powder and granular form.

Suitably, the surface modification is of substantially uniform depth across the physical surface area of the filtration material (such as the fibre, wire or powder grain) whether visible or not. The thickness of the coating is suitably controlled such that the presence of the coating does not significantly or negatively affect the filtration properties of the filtration media. The thickness of the coating is suitably controlled such that the presence of the coating does not significantly or negatively affect the permeability of the filtration media.

Suitably, the surface modification extends to at least 5 nm, preferably at least 10 nm and more preferably at least 20 nm. The surface modification may extend to less than 1 μm, suitably less than 500 nm, preferably less than 150 nm, and more preferably less than 100 nm. When the filtration material comprises metal fibre the surface modification typically extends to 200 to 350 nm. When the filtration material comprises wire mesh, the surface modification typically extends to 250 to 300 nm.

When the filtration material comprises "hardware" (i.e. the parts which hold the filtration material together to create a filter element such as end caps, support core and outer shrouds) the surface modification typically extends to 400 nm.

The coating applied to the filtration material according to the present invention greatly reduces the surface energy of the material. Typically this is measured by way of the contact angle. A given system of solid, liquid, and vapour at a given temperature and pressure has a unique equilibrium contact angle. The contact angle measurement enables the determination of the relationship between a liquid and a solid from which a surface energy value may be derived.

The contact angle is the angle that is measured through the liquid (angle 0) and where the liquid/vapour interface ($\gamma^{lv}$) meets the solid surface ($\gamma^{sl}$). It quantifies the ability of a solid surface to be wetted by a liquid, so called "wettability", via Young's equation:

$$\gamma^{sv} = \gamma^{sl} + \gamma^{lv} \cos \theta$$

wherein:

$\theta$ is the contact angle;
$\gamma^{sv}$ is the solid/liquid interfacial free energy;
$\gamma^{sl}$ is the solid surface interfacial free energy; and
$\gamma^{lv}$ is the liquid surface free energy.

The contact angle is measured using the static sessile drop method. The sessile drop contact angle is measured by a contact angle goniometer using an optical subsystem to capture the profile of the liquid on the solid substrate. The angle formed between the liquid/solid interface and the liquid/vapor interface is the contact angle. This is carried out with systems that employ high resolution cameras and software to capture and analyze the contact angle. Angles measured in such a way are often quite close to what is referred to as the advancing contact angle.

The modified surface of the filtration material according to the present invention contains at least atoms of silicon, carbon and hydrogen. In one embodiment the modified surface of the filtration material according to the invention additionally contains oxygen. As described in more detail below, these elements are typically introduced to the filter material by chemical vapour deposition, by introducing a volatile precursor compound containing silicon, carbon and hydrogen. The volatile precursor decomposes on or over the surface of the filtration material such that Si, C and H atoms (as single atoms, molecular fragments, or a mixture thereof) are deposited or formed on the surface of the filtration material to form the modified surface. The modified surface containing silicon, carbon and hydrogen atoms is also referred to in this specification as a "carbosilane modified surface".

In an optional further step, oxidation with a source of oxygen (typically air) introduces the oxygen atoms to the modified surface to produce the final surface modified product. The modified surface containing silicon, carbon, hydrogen and oxygen atoms is also referred to in this specification as an "oxycarbosilane modified surface".

In one embodiment, the modified surface comprises constituents of a decomposed organosilane. In this specification the term "organosilane" in its broadest sense covers any compound in which a silicon atom is bound to both a carbon atom and a hydrogen atom. The decomposition of the organosilane under CVD conditions results in silicon, hydrogen and carbon atoms (as single atoms, molecular fragments or a mixture thereof) are deposited on the surface of the filtration material to form the carbosilane modified surface. Examples of suitable organosilanes which may be decomposed to form the carbosilane modified surface are described below.

In one embodiment the modified surface comprises constituents of a decomposed difunctional organosilane. By thermally decomposing a difunctional organosilane, the surface of filtration material can be modified to include molecules including silicon, carbon, and hydrogen atoms. Difunctional organosilanes have the general formula $R(R')SiH_2$, wherein R and R' may be the same or different and are each an organic group. Typical organic groups include hydrocarbyl (i.e. a monovalent radical comprising carbon and hydrogen atoms only, e.g. alkyl, alkenyl, alkynyl, aryl or arylalkyl) carboxyl, ester (alkoxycarbonyl), amino, amides, sulfonic acids, organometallic complexes, and/or epoxides. Preferably at least one (more preferably both) of R and R' is a hydrocarbyl group. More preferably at least one (even more preferably both) of R and R' are an alkyl group, especially a $C_{1-4}$ alkyl group such as a methyl or ethyl group.

Preferably the difunctional organosilane is a dialkylsilane, in other words a difunctional organosilane in which both R and R' are an alkyl group. The alkyl groups R and R' in the dialkylsilane may be the same or different and preferably have 1 to 10, more preferably 1 to 6, even more preferably 1 to 4, and most preferably 1 or 2 carbon atoms. Examples of dialkylsilanes include dimethylsilane, diethylsilane, dipropylsilane and dibutylsilane. More preferably, the diallkylsilane is dimethylsilane.

In one embodiment the modified surface comprises constituents of a decomposed trifunctional organosilane. Trifunctional organosilanes have the general formula $R(R')(R'')SiH$, wherein R, R' and R" may be the same or different and are each an organic group (as defined and exemplified above). Preferably at least one (more preferably all three) of R, R' and R" is a hydrocarbyl group. More preferably at least one (even more preferably all three) of R, R' and R" are an alkyl group, especially a $C_{1-4}$ alkyl group such as a methyl or ethyl group.

Preferably the trifunctional organosilane is a trialkylsilane, in other words a trifunctional organosilane in which R, R' and R" are all alkyl groups. The alkyl groups R, R' and R" in the trialkylsilane may be the same or different and preferably have 1 to 10, more preferably 1 to 6, even more preferably 1 to 4, and most preferably 1 or 2 carbon atoms. Examples of trialkylsilanes include trimethylsilane, triethylsilane, tripropylsilane and tributylsilane. More preferably, the trialkylsilane is trimethylsilane.

In one embodiment, the filtration material is provided with a first and a second surface modification, the first surface modification comprising decomposed constituents of a first organosilane and the second surface modification comprising decomposed constituents of a second, different organosilane. In one embodiment the first surface modification comprises constituents of a decomposed difunctional organosilane (preferably a dialkylsilane such as dimethylsilane). In one embodiment the second surface modification comprises constituents of a decomposed trifunctional organosilane (preferably a trialkylsilane such as trimethylsilane). As the CVD process is a diffusion-based process, the first and second surface modifications mean that the components of the second surface modification diffuse into the first: the second surface modification need not comprise a layer on the surface of the first surface modification.

In a preferred embodiment, the filtration material is provided with a first and a second surface modification, the first surface modification comprising decomposed constituents of decomposed dimethylsilane, and the second surface modification comprising constituents of decomposed trimethylsilane. As described herein, it has been surprisingly found by the present inventors that filtration material (particularly metallic filtration material) which has been provided with both a first and a second surface modification using these two different silane precursors exhibits a particularly reduced surface energy, and as a result contaminants adhering to the surface of such filtration material much more weakly, thereby enabling such filtration material to be cleaned much more easily than was previously possible in the art.

The surface modification applied to the filtration material according to the invention may contain further atoms in addition to silicon, carbon and hydrogen, in order to functionalise the filtration material. The further atoms are not particularly limited provided that the resulting surface chemistry reduces the surface energy and can survive the operating conditions of the filtration material, and examples of typical atoms that may also be present include nitrogen, phosphorus, sulphur, halogen (fluorine, chlorine, bromine or iodine), or metal atoms (as defined and exemplified above - the metal atom preferably being different from the metal atom which forms the body of the filtration material). In one aspect of the present invention the elements forming the surface modification additionally includes oxygen.

## Method

The present invention also provides a method of providing the above surface modification to at least one surface of a filtration material. Typically, this is carried out by chemical vapour deposition, the method comprising decomposition of one or volatile precursor molecules containing at least silicon, carbon and hydrogen. As described above, while not wishing to be bound by theory, it is believed that the surface modification by CVD both reduces the surface energy of the filtration material (particularly a metallic filtration material), and also provides a mechanical key and develops a controlled thickness external coating on the filter.

The invention also provides a method of manufacturing a filtration material having a modified surface, the atoms defining the modified surface comprising silicon, carbon, and hydrogen, the method comprising:

(a) forming a filtration material; and
(b) modifying the surface of the filtration material according to the chemical vapour deposition method of the invention.

In one embodiment the chemical vapour deposition method of the invention comprises decomposition of an organosilane (as defined and exemplified above), such that the atoms defining the modified surface comprise silicon, carbon and hydrogen. The method causes the organosilane to be thermally dissociated into molecular fragments including H, C and Si, and combinations thereof, and the constituents are deposited or formed onto the surface of the filtration material to form the modified surface including silicon, carbon and hydrogen resulting from decomposition of the organosilane. Although not intending to be bound by theory, it is believed that the organosilane thermally decomposes to form carbosilyl fragments, which recombine and bind to modify the surface of the filtration material.

In one embodiment, the organosilane may be used in the chemical vapour deposition method of the invention as a pure gas, i.e. in undiluted form. In another embodiment, the organosilane may be used in the chemical vapour deposition method of the invention with an inert gas, such as nitrogen, helium, and/or argon, as a partial pressure diluent.

In one embodiment, the chemical vapour deposition method is carried out at a pressure of about 5 kPa to about 800 kPa. In a preferred embodiment, the chemical vapour deposition method is carried out at a pressure of about 25 kPa to about 300 kPa. In a more preferred embodiment, the chemical vapour deposition method is carried out at a pressure of about 50 kPa to about 225 kPa. In a most preferred embodiment, the chemical vapour deposition method is carried out at a pressure of about 25 kPa to about 175 kPa.

In one embodiment, the chemical vapour deposition method is carried out at a temperature of about 300°C to about 600°C. In a preferred embodiment, the chemical vapour deposition method is carried out at a temperature of about 400° to about 500°C. In a more preferred embodiment, the chemical vapour deposition method is carried out at a temperature of about 425° to about 475°C.

In one embodiment, the chemical vapour deposition method is carried out for a time of about 30 minutes to about 120 hours. In a preferred embodiment, the chemical vapour deposition method is carried out for a time of about 48 hours to about 96 hours. In a more preferred embodiment, the chemical vapour deposition method is carried out for a time of about 54 hours to about 84 hours. In a most preferred embodiment, the chemical vapour deposition method is carried out for a time of about 60 hours to about 72 hours.

In one embodiment, the organosilane used in the chemical vapour deposition surface modification method of the invention is selected from the group consisting of a difunctional organosilane (as defined and exemplified above), a trifunctional organosilane (as defined and exemplified above), or a combination of any thereof.

Preferably, the organosilane is selected from the group consisting of a dialkylsilane, a trialkylsilane, or a combination of any thereof. In one embodiment, the organosilane is dimethylsilane. In one embodiment, the organosilane is trimethylsilane.

It is preferred that the chemical vapour deposition surface modification method of the invention uses a difunctional organosilane followed by a trifunctional organosilane, more preferably a dialkylsilane followed by a trialkylsilane, and especially preferred is dimethylsilane followed by trimethylsilane. Without wishing to be bound by theory, it is believed that the trifunctional organosilane used in the second step functionalises the surface, the additional functional group (for example, an alkyl group such as a methyl group) "capping" the existing functional groups formed in the first surface modification using the difunctional organosilane. The additional functional group (for example, an alkyl group such as a methyl group) provided by the addition of the trifunctional organosilane in the second step may enable the lower surface energy to be achieved on the surface of the filtration material, thus weakening adhesion of any contaminants and enabling the surface of the filtration material to be cleaned more easily.

In one embodiment, the filtration material is exposed to dialkylsilane and/or trialkylsilane (preferably dimethylsilane and/or trimethylsilane) gas at a pressure of about 5 kPa to about 800 kPa. In a preferred embodiment, the filtration material is exposed to dialkylsilane and/or trialkylsilane (preferably dimethylsilane and/or trimethylsilane) gas at a pressure of about 25 kPa to about 300 kPa. In a more preferred embodiment, the filtration material is exposed to dialkylsilane and/or trialkylsilane (preferably dimethylsilane and/or trimethylsilane) gas at a pressure of about 50 kPa to about 225 kPa. In a most preferred embodiment, the filtration material is exposed to dialkylsilane and/or trialkylsilane (preferably dimethylsilane and/or trimethylsilane) gas at a pressure of about 25 kPa to about 175 kPa.

In one embodiment, the filtration material is exposed to dialkylsilane and/or trialkylsilane (preferably dimethylsilane and/or trimethylsilane) gas at a temperature of about 300°C to about 600°C. In a preferred embodiment, the filtration material is exposed to dialkylsilane and/or trialkylsilane (preferably dimethylsilane and/or trimethylsilane) gas at a temperature of about 400° to about 500°C. In a more preferred embodiment, the filtration material is exposed to dialkylsilane and/or trialkylsilane (preferably dimethylsilane and/or trimethylsilane) gas at a temperature of about 425° to about 475°C.

In one embodiment, the filtration material is exposed to dialkylsilane and/or trialkylsilane (preferably dimethylsilane and/or trimethylsilane) gas for a time of about 30 minutes to about 120 hours. In a preferred embodiment, the filtration material is exposed to dialkylsilane and/or trialkylsilane (preferably dimethylsilane and/or trimethylsilane) gas for a time of about 48 hours to about 96 hours. In a more preferred embodiment, the filtration material is exposed to dialkylsilane and/or trialkylsilane (preferably dimethylsilane and/or trimethylsilane) gas for a time of about 54 hours to about 84 hours. In a most preferred embodiment, the filtration material is exposed to dialkylsilane and/or trialkylsilane (preferably dimethylsilane and/or trimethylsilane) gas for a time of about 60 hours to about 72 hours.

The chemical vapour deposition methods used to modify the surface of the filtration materials are generally known in the art, and any known method can be used provided it is capable of modify the surface of the material so as to include at least silicon, carbon, hydrogen and oxygen atoms. Typical chemical vapour deposition methods include the following:

Atmospheric pressure chemical vapour deposition (APCVD), in which the CVD is carried out at atmospheric pressure;

Low pressure chemical vapour deposition (LPCVD) in which the CVD is carried out at a pressure below atmospheric pressure (typically 10 to 1000 Pa absolute);

Ultra high vacuum chemical vapour deposition (UHVCVD), in which the CVD is carried out at very low pressure, typically below $10^{-6}$ Pa;

Starved reaction chemical vapour deposition (SRCVD) - in a starved reaction CVD process, the output is less than the input so there is a changing gradient in the concentration of the compounds as the reaction proceeds: in other words, if $F_r$ (Reactant out/Reactant in) is << 1 then it is a starved reaction;

Atomic layer chemical vapour deposition (ALCVD), also known as atomic layer epitaxy, in which alternating monolayers of two elements are typically deposited onto the filtration material;

Plasma enhanced chemical vapour deposition (PECVD), which is a CVD method that utilizes plasma to enhance chemical reaction rates of the volatile precursors.

In the preferred method according to the present invention comprising CVD using a difunctional organosilane (such as a dialkylsilane, e.g. dimethylsilane) followed by a trifunctional organosilane (such as a trialkylsilane, e.g. trimethylsilane) it is preferred that the initial CVD step using the difunctional organosilane is a "starved reaction" CVD process.

Examples of suitable chemical vapour deposition methods are described in WO 2011/056550 (also published as US2012/251797) and WO 2012/047945 (also published as US2013/0244025), the contents of which are incorporated herein by reference thereto. In the preferred method according to the present invention comprising CVD using a difunctional organosilane (such as a dialkylsilane, e.g. dimethylsilane) followed by a trifunctional organosilane (such as a trialkylsilane, e.g. trimethylsilane), the process described in US2012/251797 followed by the process described in US2013/0244025 is particularly preferred.

In one embodiment the chemical vapour deposition surface modification method of the invention comprises: (a) applying a first surface modification to at least one surface of the filtration material by chemical vapour deposition comprising decomposition of a first organosilane; and (b) applying a second surface modification to the at least one surface of the filtration material by chemical vapour deposition comprising decomposition of a second, different organosilane.

In this embodiment, preferably the first organosilane is a difunctional organosilane, and the second organosilane is a trifunctional organosilane. More preferably, the first organosilane is a dialkylsilane and the second organosilane is a trialkylsilane. Most preferably, the first organosilane is dimethylsilane and the second organosilane is trimethylsilane.

Without wishing to be bound by theory, it is believed that the trifunctional organosilane used in the second step functionalises the surface, the additional functional group (for example, an alkyl group such as a methyl group) "capping" the existing functional groups formed in the first surface modification using the difunctional organosilane. The additional functional group (for example, an alkyl group such as a methyl group) provided by the addition of the trifunctional organosilane in the second step may enable the lower surface energy to be achieved on the surface of the filtration material, thus weakening adhesion of any contaminants and enabling the surface of the filtration material to be cleaned more easily.

A two-step process comprising surface modification by chemical vapour deposition using dimethylsilane followed by functionalisation by chemical vapour deposition using with trimethylsilane is described in US2012/0251797 (first step) and US2013/0244025 (second step), the contents of which are incorporated herein by reference thereto.

In one embodiment, the method of the invention further comprises oxidising the carbosilane surface modification (i.e. the decomposed organosilane) on the surface of the filtration material with an oxidant. This typically causes the carbosilane surface modification to become oxidised, such that oxygen atoms are also present as part of the surface modification in addition to silicon, hydrogen and carbon. The modified surface containing silicon, carbon, hydrogen and oxygen atoms is also referred to in this specification as an "oxycarbosilane modified surface".

When an oxidation step forms part of the process, the oxidation reagent is not particularly limited. Typical reagents include molecular oxygen (either in air or in a more purified form), ozone, oxidising acids (e.g. sulphuric acid or nitric acid), transition metal oxidising agents (e.g. chromium (VI) compounds or manganese (VII) compounds). Preferably the oxidation reagent is molecular oxygen in air.

In one embodiment, the surface modification method of the present invention comprises:

(a) a first carbosilane surface modification to at least one surface of the filtration material by chemical vapour deposition comprising decomposition of a first organosilane (preferably a difunctionalised organosilane, more preferably a dialkylsilane and most preferably dimethylsilane);
(b) a second carbosilane surface modification to the carboxysilane surface of the filtration material by chemical vapour deposition comprising decomposition of a second, different organosilane (preferably a trifunctionalised organosilane, more preferably a trialkylsilane and most preferably trimethylsilane).

Typically, the method of the invention is applied to a filtration material as defined herein. In one embodiment, the method is applied to a filtration material having a pore diameter of at least 100 nm. In one embodiment, the method is applied to a filtration material having pore diameter of at least 200 nm. In one embodiment, the method is applied to a filtration material having a pore diameter of at least 500 nm. In one embodiment, the method is applied to a filtration material having a pore diameter of at least 1 $\mu$m to 10 $\mu$m. In one embodiment, the method is applied to a filtration material having a pore diameter of at most 100 $\mu$m. In one embodiment, the method is applied to a filtration material having pore diameter of at most 50 $\mu$m. In one embodiment, the method is applied to a filtration material having a pore diameter of at most 20 $\mu$m. In one embodiment, the method is applied to a filtration material having a pore diameter of at most 10 $\mu$m. In one embodiment, the method is applied to a filtration material having a pore diameter from 100 nm to 100 $\mu$m. In one embodiment, the method is applied to a filtration material having pore diameter from 200 nm to 50 $\mu$m. In one embodiment, the method is applied to a filtration material having a pore diameter from 500 nm to 20 $\mu$m. In one embodiment, the method is applied to a filtration material having a pore diameter from 1 $\mu$m to 10 $\mu$m. The pore diameter of the filtration material is measured using the bubble point test in accordance with ISO4003.

## Filter Elements, Filter Units and Filtration Methods

The invention also comprises a filter element comprising the filtration material of the invention. Examples of suitable filter elements include flexible filtration elements such as screens and sheets, and more rigid filtration elements such as frits, disc, cylinders and pleated cartridges as well as filtration structures of multiple elements and cartridge configurations.

In another aspect, the invention also comprises a filter unit comprising a filtration material and/or a filter element as defined above (described generally below as a "filtration media") and a supporting structure.

The filtration material of the invention exhibits benefits in relation to both *in situ* and *ex situ* cleaning. In this specification "*in situ* cleaning" means a cleaning process performed in the same process environment as that in which the contaminant was applied to the filter. In contrast, "*ex situ* cleaning" means a cleaning process performed after the filter is removed from the process environment in which the contaminant was applied to the filter.

In particular, as described herein, both *in situ* and *ex situ* cleaning of the filtration material of the invention have resulted in significantly improved permeability recovery, this being the primary measure of the filter recovery. This can be measured as follows. When *in situ* cleaning is performed, the dynamic operating conditions of the filtration medium provide an immediate "before" and "after" result: these results can be reviewed over a period of time (that can be between minutes and thousands of hours) such that the "blinding curve" can be examined and a trend determined that demonstrates improvement over the prior art. When *ex situ* cleaning is performed, following the cleaning the filters are flow tested with a known fluid under controlled and measurable conditions and the differential pressure is recorded over a range of flows. This is performed before and after cleaning.

It has been surprisingly found according to the present invention that filter elements and/or filter units incorporating the coated filtration material are much less susceptible to adhesion of contaminants thereto, and therefore require much less frequent and/or energy-intense cleaning than those known in the art. In particular, filter units comprising the filtration material of the invention are estimated to have a greatly increased operational life (by a factor of around 3), compared with both untreated filters and filters having their surface modified using the silane ($SiH_4$)-based process as described in GB 2394428A, before *in situ* cleaning is required.

In addition, it has surprisingly been found that the filtration medium of the present invention is able to undergo a large number of cycles of *in situ* cleaning after the surface modification had been applied to the filter medium. This is contrary to what would have been expected in the prior art, in which some level of contaminant has typically been left behind following each cleaning cycle., as the presence of contaminants would be expected to mask the benefit of prior *in situ* cleaning during the next cycle.

When the filter elements commence operation from new, without contaminant, the challenge causes contaminant to be captured in and on the filter medium matrix. When a pulsejet is applied to effect *in situ* cleaning, the outer surface cake is removed as is some of the near surface contaminant, but very little of the contaminant buried deeper in the matrix of the filtration medium is cleaned. As a result there is a gradual increase in differential pressure, as after each pulse the filtration media is cleared of surface cake and the media is temporarily exposed to direct challenge before the cake redevelops. Therefore the amount of solids present on and/or in the filtration medium is gradually increases.

The amount of solids present on and/or in the filtration medium is typically measured in $g/m^2$, starting at zero when clean. By weighing the filtration medium after challenge with solids, and comparing it to the original weight, it can be assessed how much additional weight is present for a mass/unit area. Once the filtration medium has been cleaned, it is then weighed again to enable comparison with the value prior to cleaning.

At the point which the filter media differential pressure reaches a condition where it is no longer acceptable to operate due to differential pressure, requiring them to be removed for *ex situ* cleaning, the solids level is typically between 250 and 450 $g/m^2$. Typically the weight after *ex situ* cleaning is 150 and 350 $g/m^2$. There is an overlap between the values as variability can exist within the process itself.

In addition, when subjected to *ex situ* cleaning the cleanliness of filter elements containing the filtration material of the invention has been returned to within 90% of the original unused performance (as measured by permeability). This is a particularly surprising result when compared to previously recovered performance compared with both untreated filters and filters having their surface modified using the silane ($SiH_4$)-based process as described in GB 2394428A, which may only be cleaned to within 50% or lower of the original unused performance in many cases.

There is no specific limitation to the type of particulate that may be retained on, and may therefore require cleaning from, the filter media. The size distribution will be ranging from below 1 $\mu$m to over 2 mm in size: typically, the particulates are less than about 100 $\mu$m in size.

The chemical composition of the particulate that may be retained on, and may therefore require cleaning from, the filter media is not particularly limited. For example, from a coal gasification process carbon, sulphur and/or metal oxides may char the filtration material and require removal. Similarly, for a catalytic process, the filter may be clogged or contaminated with particulate material with a high percentage of metals (especially transition metals such as iron, palladium, platinum, nickel and/or manganese).

Typically, filter elements may be cleaned according to the pulsejet method, which is generally known to those skilled in the art. The pulsejet conditions are typically customised to suit the operating parameters of the plant. Typically the pulse jet cleaning is carried out at a pressure of from about 50 to about 100 barg (bar gauge pressure). Typically the pulse jet cleaning is carried out at a temperature of from about 200 to 250°C.

The supporting structure may comprise a surface, core, framework, or a plurality thereof, arranged to support the filtration media. The supporting structure may have any suitable configuration.

The supporting structure suitably comprises a mesh, preferably a wire mesh, which may be woven. The mesh is suitably arranged substantially parallel to the extent of the filtration media. The mesh may be arranged upstream and/or downstream of the filtration media relative to the direction of gas/liquid flow in use.

Alternatively, or in addition, the supporting structure may comprise a core, about which the filtration media is supported.

The filtration media may be separate from the supporting structure. Alternatively, the filtration media may be attached, either directly or indirectly, to the supporting structure. The filtration media and the supporting structure may be connected by sintering or welding, for example.

The filter unit may have any suitable conformation. For example, the filter unit may be cylindrical, pleated or planar. The filtration media may have any suitable conformation within the filter unit. For example, the filtration media may have a pleated structure, which may then be used to form a substantially cylindrical filter unit.

The supporting structure may determine the conformation of the filter unit. Alternatively, the supporting structure and the filtration media may be arranged to provide a filter unit of the required conformation.

If the filter unit has a cylindrical conformation or the like, the supporting structure may further comprise one or more end cap. The one or more end cap is suitably arranged on the end of the cylindrical body, and may have either an open or closed configuration.

Suitably, part or all of the supporting structure also has a coating applied thereto. The coating may be the same as defined herein for the filtration material of the invention, as defined herein, or may be any other conventional coating known in the art. Preferably, the whole of the filter unit has a coating applied thereto.

Suitably, the filtration media and the supporting structure are assembled into the required conformation before the coating is applied.

In another aspect, the invention also comprises method of filtering a fluid, comprising passing the fluid through a filtration material, a filter element or a filter unit according to the invention. Such methods are well known to those skilled in the art.

## Examples

The invention will now be described by way of the following examples. These examples are not to be construed as limiting the scope of the invention.

## Example 1 - Operation of full scale plant with *in situ* pulse jet cleaning

The data shown below relate to filter elements having a mean pore diameter (as measured in accordance with ISO 4003) of 25 $\mu$m that have been operated under the following process conditions:

>     Pressure $\approx$ 25 barg (i.e. 25 bar, gauge pressure)
>     Temperature $\approx$ 330°C
>     Gas flow rate $\approx$ 150,000 kg hour$^{-1}$
>     Gas viscosity $\approx$ 2.5 x 10$^{-5}$ Pa.s
>     Gas density $\approx$ 12 kg m$^{-3}$
>     Solids challenge $\approx$ 2,000 kg hour$^{-1}$

The filters were surface modified as complete constructed assemblies though may equally be surface modified as sections of component parts and assembled afterwards. The filters were installed into a purpose designed processing pressure vessel (diameter 750 mm; pressure tan/tan height 1600 mm) with suitable internal fixtures to maintain the positioning and placement of the filters.

The filter elements underwent a surface modification by chemical vapour deposition using dimethylsilane according to the method described in US2012/0251797 which was followed by a functionalisation by chemical vapour deposition using trimethylsilane, according to the method described in US2013/0244025. The reaction was carried out for a total time of 70 hours, at a constant temperature of 450°C and a constant pressure of 1.7 barg. The processing vessel is placed within an oven from which it is connected to a gas supply distribution system to provide the dimethyl- and trimethylsilane in the order required and under the necessary process conditions and duration required.

The data provided shown is from a full scale operating plant where the filter system is equipped with many hundreds of filter elements in operation and compares the differential pressure over standard operating time of different filter element designs. There are two designs compared: one that has not received surface modification of which there are two separate operational runs shown and the second which is alternate design where the installed filters have been subject to this surface modification.

The filters are operated whilst their differential pressure is constantly being monitored to permit a constant ongoing analysis of the differential pressure change (rise) rate this being the direct determination of the filter operating performance. This differential pressure was monitored by four differential pressure instruments (Honeywell ST3000 Smart DP Transmitter Series 900) connected at the inlet and outlet pipelines of each filter system to ensure accuracy of measurement value.

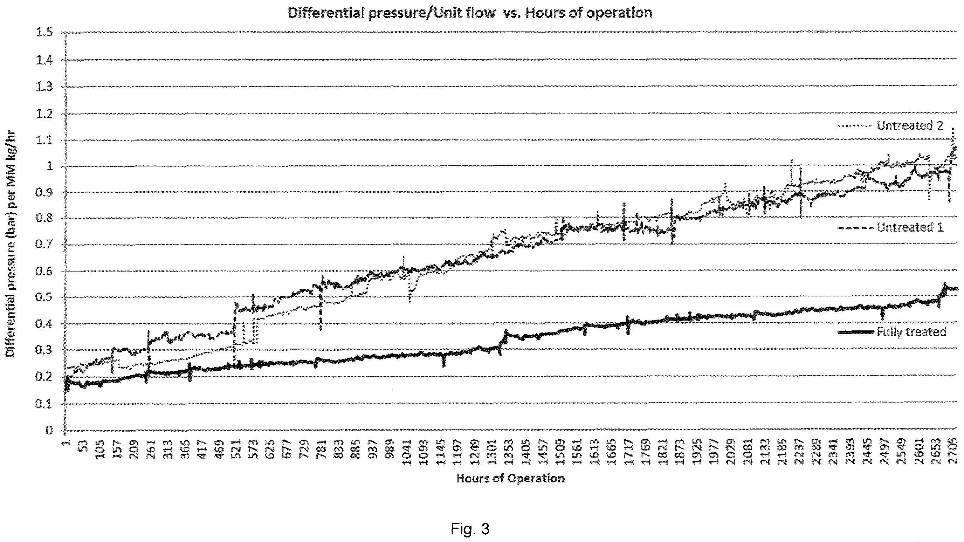

The results are shown in Fig. 3. As is clearly demonstrated, the surface modification according to the present invention results in the rate of differential pressure rise being significantly reduced as the filter resists the effect of the contaminant adhesion to the filter resulting in a vastly improved *in situ* cleaning efficacy by the pulse jet blowdown. The differential pressure rise shown has been rationalised for any flow variations that occur.

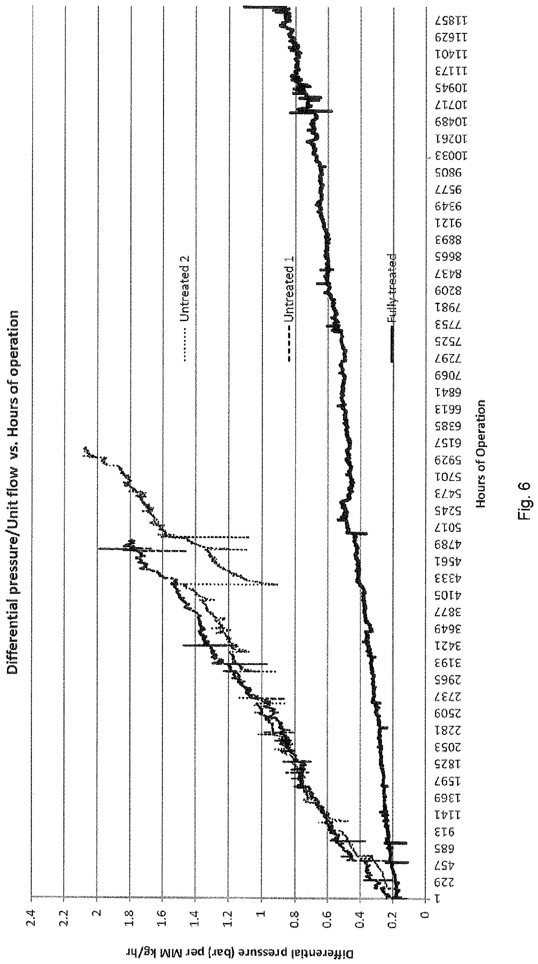

Further monitoring of the differential pressure was carried out during operation of the filter up to a total of 12,000 operating hours. The results are shown in Fig. 6. As is clearly demonstrated, the surface modification according to the present invention continues to result in the rate of differential pressure rise being significantly reduced as the filter resists the effect of the contaminant adhesion to the filter, thereby continuing to enable *in situ* cleaning.

**Example 2 - Operation of *ex situ* filter cleaning**

This data relates to the *ex situ* cleaning of filter clusters that are subjected to a cleaning regime that includes steam and steam condensate in the reverse flow and is then checked following drying to determine the degree of recovery.

The filter elements underwent a surface modification by chemical vapour deposition using dimethylsilane according to the method described in US2012/0251797 and which was followed by a functionalisation by chemical vapour deposition using trimethylsilane, according to the method described in US2013/0244025, under the same conditions as Example 1.

The cleaning conditions utilised are as follows;

> Step 1 - Water rinse at 30°C using a 5 barg water supply for up to 10 minutes
> Step 2 - Neutralising solution at 80°C using an immersion bath and hold for 30 minutes
> Step 3 - Repeat step 1 but for 30 minutes
> Step 4 - Steaming using superheated steam with a minimum temperature of 130°C for 120 minutes
> Step 5 - Dry for a minimum of 12 hours with an air supply at 2 barg and a minimum of 100°C temperature

The filters are tested as groups of filters and are flow tested before and after cleaning. The air testing is performed at 10 to 30°C and at a pressure of between 1 and 2 barg for a maximum time of 5 minutes.

All of the filters compared in this Example had been operated for the same amount of hours and challenged with the same gas and char concentrations and with char with the same particle size distribution the same as for Example 1.

The filters were operated for a complete campaign and had experienced a differential pressure in operation in excess of 500 mbar which is within the normal limit of operations permitted.

The filters which have been cleaned *ex situ* are subjected to a range of different flows of clean air to determine the contaminated differential pressure condition permitting an assessment of permeability of the residual condition. Following the *ex situ* cleaning and drying the filters are subjected to a repeat of the range of different flows of clean air and subsequently a comparable condition is provided. To provide the fullest comparison, the differential pressure of the unused filters is provided.

Four groups of filter elements were assembled onto a tubeplate where in all cases the number of filter elements and their dimensions were identical.

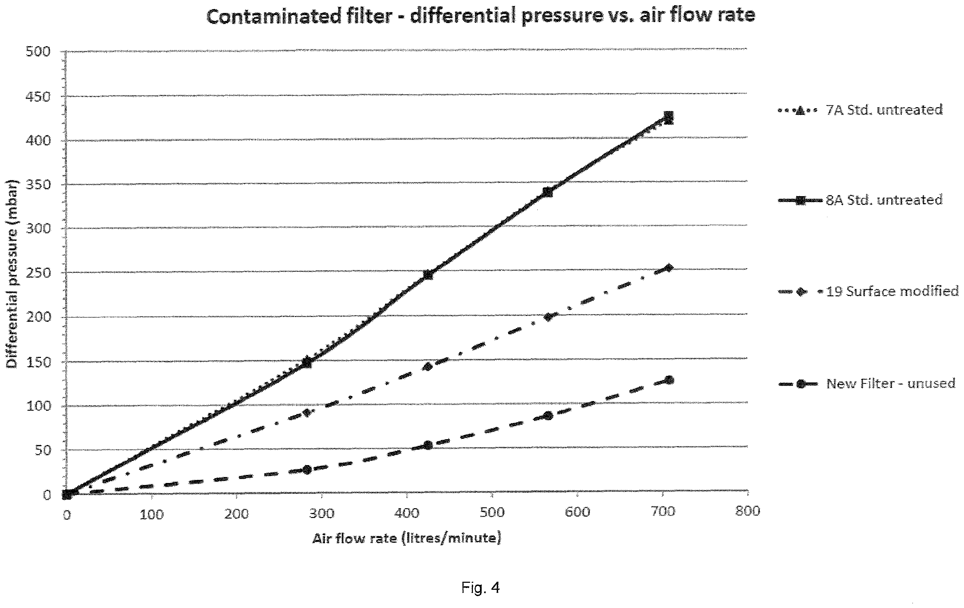

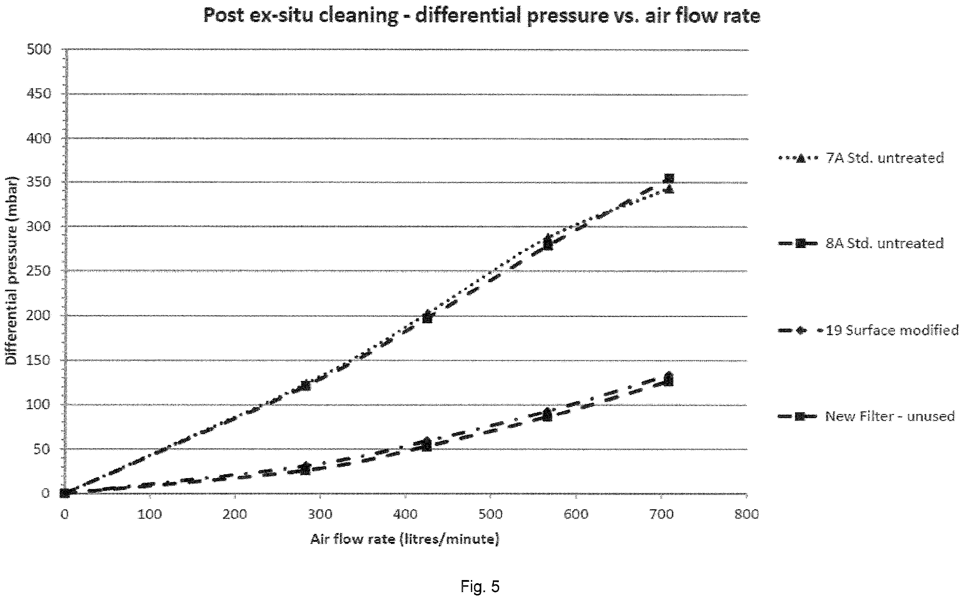

The results are shown in Figs. 4 and 5. Designations "7A" and "8A" as referred to in Figs. 4 and 5 relate to a group of filter elements in the standard untreated condition. In the case of designation "19" this relates to a group of filter elements in the surface modified condition according to the present invention. The data designated as "New Filter- unused" relates to a group of filter elements that have not been operated and represent the "as-new" condition.

In this particular operational run the surface modified filter elements were operated in an arrangement where they shared the same containment as filters that had not been surface modified. As a result it is thought that as the surface modified filter elements have been demonstrated to exhibit better *in situ* cleaning properties than unmodified filter elements, then the inherent improved permeability would have resulted in an increased challenge being experienced as more flow (both gas and solids) will have resulted at these filters as differential pressure must remain in equilibrium.

The results demonstrated that the surface modified filter elements according to the present invention exhibit not only a lower average differential pressure in the contaminated condition (as shown in Fig. 4), which is further evidence of the influence of the surface modification in resisting the contaminant adhesion, as shown in Fig. 5 when the filter elements were cleaned they returned to a lower differential pressure and one that was very close to the original new condition, which has never previously been achieved in the prior art.

It can be concluded that surface modification of the filters according to the present invention enables the operations of the filter system to operate for longer campaign times before the need to perform *ex situ* cleaning to be performed that will significantly improve the efficiency of the operating plant. Furthermore, this surface modification of the filters enables the *ex situ* cleaning to be performed to a far greater degree of recovery as regards the permeability of the filter and as a result will also extend the operation times of the filter, thereby solving the problem of the reduced campaign times which has been possible in the prior art as the starting differential pressure has been greater than that of the new filters.

**Example 3 - Contact angle comparison**

The contact angles of a number of treated surfaces was measured using the static sessile drop method using a contact angle goniometer (Rame-Hart Model 250) which includes an optical subsystem and DROPimage software to capture the profile of the liquid on the solid substrate.

Measured contact angles of relevant surfaces are as follows:

Contact angles of stainless steels having the following surface modifications were as follows:

Untreated stainless steel = 36.0°
Silane based surface (treated according to the method of GB 2394428A) = 53.6°
SilcoNert (treated according to another $SiH_4$-based method) = 87.3°
Surface treated according to the method of the present invention = 105.5°

As the above contact angle measurements demonstrate, the surface modification according to the present invention exhibits greatly reduced surface energy compared with both the silane-based surface treated according to the method of GB 2394428A and the surface treated according to other known $SiH_4$-based methods.

Although the present invention has been described in connection with specific preferred embodiments, it should be understood that the invention as claimed should not be unduly limited to such specific embodiments. Indeed, various modifications of the described modes for carrying out the invention which are obvious to those skilled in chemistry, materials science or related fields are intended to be within the scope of the following claims.

**Claims**

1. A filtration material wherein at least one surface thereof is modified, wherein the atoms defining the surface modification comprise silicon, carbon and hydrogen, the filtration material having a pore diameter from 0.1 $\mu$m to 100 $\mu$m, wherein the filtration material is metallic or ceramic.

2. A filtration material according to claim 1, wherein the atoms defining the surface modification additionally comprise oxygen.

3. A filtration material according to claim 1 or claim 2, having a first and a second surface modification, the first surface modification comprising constituents of a decomposed difunctional organosilane and the second surface modification comprising constituents of a decomposed trifunctional organosilane.

4. A filtration material according to claim 1, having a pore diameter from 1 $\mu$m to 100 $\mu$m.

5. A method of modifying at least one surface of a filtration material as defined in any one of claims 1 to 4, the method comprising:

(a) a first modification of the at least one surface of the filtration material by chemical vapour deposition comprising decomposition of a difunctional organosilane; and
(b) a second modification of the at least one surface of the filtration material modified in step (a) by chemical vapour deposition comprising decomposition of a trifunctional organosilane.

6. A method according to claim 5, wherein the difunctional organosilane used in step (a) is a dialkylsilane or a mixture thereof.

7. A method according to claim 5 or claim 6, wherein the trifunctional organosilane used in step (b) is a trialkylsilane or a mixture thereof.

8. A method according to claim 6, wherein the dialkylsilane used in step (a) is dimethylsilane.

9. A method according to claim 7, wherein the trialkylsilane used in step (b) is trimethylsilane.

10. A method according to claim 5, further comprising the following step after step (a) but before step (b):

(a1) oxidising the at least one surface of the filtration material modified in step (a).

11. A method according to any one of claims 5 to 10, wherein the chemical vapour deposition is selected from the group consisting of atmospheric pressure chemical vapour deposition (APCVD), low pressure chemical vapour deposition (LPCVD), ultra high vacuum chemical vapour deposition (UHVCVD), starved reaction chemical vapour deposition (SRCVD), atomic layer chemical vapour deposition (ALCVD) and plasma enhanced chemical vapour deposition (PECVD).

12. A method according to claim 5, wherein the method used in step (a) is starved reaction chemical vapour deposition (SRCVD).

13. A method of manufacturing a surface modified filtration material, the atoms defining the surface modification comprising silicon, carbon and hydrogen, the method comprising:

(a) forming a filtration material; and
(b) modifying the surface of the filtration material according to the method of any one of claims 5 to 12.

14. A filter element comprising the filtration material as defined in any one of claims 1 to 4 .

15. A filter element according to claim 14, selected from the group consisting of a cartridge, a screen, a cylinder, a sheet, a disc and a frit.

16. A filter unit comprising a filter element according to claim 15 or claim 16 and a supporting structure.

17. A method of filtering a fluid, comprising passing the fluid through a filtration material of any one of claims 1 to 4, a filter element according to claim 14 or 15 or a filter unit according to claim 16.

18. Use of a material according to any one of claims 1 to 4 in filtration.

19. Use of a material according to any one of claims 1 to 4 in filtration in a gasification plant.


**Patentansprüche**

1. Filtermaterial, wobei wenigstens eine Oberfläche davon modifiziert ist, wobei die Atome, die die Oberflächenmodifikation definieren, Silicium, Kohlenstoff und Wasserstoff umfassen, wobei das Filtermaterial einen Porendurchmesser von 0,1 $\mu$m bis 100 $\mu$m aufweist, wobei das Filtermaterial metallisch oder keramisch ist.

2. Filtermaterial gemäß Anspruch 1, wobei die Atome, die die Oberflächenmodifikation definieren, zusätzlich Sauerstoff umfassen.

3. Filtermaterial gemäß Anspruch 1 oder Anspruch 2, das eine erste und eine zweite Oberflächenmodifikation aufweist, wobei die erste Oberflächenmodifikation Bestandteile eines zersetzten difunktionellen Organosilans umfasst und die zweite Oberflächenmodifikation Bestandteile eines zersetzten trifunktionellen Organosilans umfasst.

4. Filtermaterial gemäß Anspruch 1 mit einem Porendurchmesser von 1 $\mu$m bis 100 $\mu$m.

5. Verfahren zum Modifizieren wenigstens einer Oberfläche eines Filtermaterials gemäß einem der Ansprüche 1 bis 4, wobei das Verfahren umfasst:

(a) eine erste Modifikation der wenigstens einen Oberfläche des Filtermaterials durch chemische Dampfabscheidung, die Zersetzung eines difunktionellen Organosilans umfasst; und
(b) eine zweite Modifikation der wenigstens einen Oberfläche des bei Schritt (a) modifizierten Filtermaterials durch chemische Dampfabscheidung, die Zersetzung eines trifunktionellen Organosilans umfasst.

6. Verfahren gemäß Anspruch 5, wobei das bei Schritt (a) verwendete difunktionelle Organosilan ein Dialkylsilan oder ein Gemisch davon ist.

7. Verfahren gemäß Anspruch 5 oder Anspruch 6, wobei das bei Schritt (b) verwendete trifunktionelle Organosilan ein Trialkylsilan oder ein Gemisch davon ist.

8. Verfahren gemäß Anspruch 6, wobei das bei Schritt (a) verwendete Dialkylsilan Dimethylsilan ist.

9. Verfahren gemäß Anspruch 7, wobei das bei Schritt (b) verwendete Trialkylsilan Trimethylsilan ist.

10. Verfahren gemäß Anspruch 5, ferner umfassend den folgenden Schritt nach Schritt (a) aber vor Schritt (b):

(a1) Oxidieren der wenigstens einen Oberfläche des bei Schritt (a) modifizierten Filtermaterials.

11. Verfahren gemäß einem der Ansprüche 5 bis 10, wobei die chemische Dampfabscheidung ausgewählt ist aus der Gruppe bestehend aus chemischer Dampfabscheidung bei atmosphärischem Druck (APCVD), chemischer Dampfabscheidung bei tiefem Druck (LPCVD), chemischer Dampfabscheidung im Ultrahochvakuum (UHVCVD), chemischer Dampfabscheidung mit verhungerter Reaktion (SRCVD), chemischer Atomschicht-Dampfabscheidung (ALCVD) und plasmaunterstützter chemischer Dampfabscheidung (PECVD).

12. Verfahren gemäß Anspruch 5, wobei das bei Schritt (a) verwendete Verfahren chemische Dampfabscheidung mit verhungerter Reaktion (SRCVD) ist.

13. Verfahren zur Herstellung eines oberflächenmodifizierten Filtermaterials, wobei die Atome, die die Oberflächenmodifikation definieren, Silicium, Kohlenstoff und Wasserstoff umfassen, wobei das Verfahren umfasst:

(a) Bilden eines Filtermaterials; und
(b) Modifizieren der Oberfläche des Filtermaterials gemäß dem Verfahren gemäß einem der Ansprüche 5 bis 12.

**14.** Filterelement, umfassend das Filtermaterial gemäß einem der Ansprüche 1 bis 4.

**15.** Filterelement gemäß Anspruch 14, ausgewählt aus der Gruppe bestehend aus einer Kartusche, einem Sieb, einem Zylinder, einem Blatt, einer Scheibe und einer Fritte.

**16.** Filtereinheit, umfassend ein Filterelement gemäß Anspruch 15 oder Anspruch 16 und eine Trägerstruktur.

**17.** Verfahren zum Filtrieren eines Fluids, umfassend Leiten des Fluids durch ein Filtermaterial gemäß einem der Ansprüche 1 bis 4, ein Filterelement gemäß Anspruch 14 oder 15 oder eine Filtereinheit gemäß Anspruch 16.

**18.** Verwendung eines Materials gemäß einem der Ansprüche 1 bis 4 bei der Filtration.

**19.** Verwendung eines Materials gemäß einem der Ansprüche 1 bis 4 bei der Filtration in einer Vergasungsanlage.


**Revendications**

**1.** Matériau de filtration dont au moins une surface est modifiée, dans lequel les atomes définissant la modification de surface comprennent le silicium, le carbone et l'hydrogène, le matériau de filtration ayant un diamètre de pore de 0,1 μm à 100 μm, le matériau de filtration étant métallique ou céramique.

**2.** Matériau de filtration selon la revendication 1, dans lequel les atomes définissant la modification de surface comprennent en outre l'oxygène.

**3.** Matériau de filtration selon la revendication 1 ou la revendication 2, comportant une première modification de surface et une deuxième modification de surface, la première modification de surface comprenant des constituants d'un organosilane difonctionnel décomposé et la deuxième modification de surface comprenant des constituants d'un organosilane trifonctionnel décomposé.

**4.** Matériau de filtration selon la revendication 1, ayant un diamètre de pore de 1 μm à 100 μm.

**5.** Procédé de modification d'au moins une surface d'un matériau de filtration tel que défini dans l'une quelconque des revendications 1 à 4, le procédé comprenant :

(a) une première modification de ladite au moins une surface du matériau de filtration par dépôt chimique en phase vapeur comprenant la décomposition d'un organosilane difonctionnel ; et
(b) une deuxième modification de ladite au moins une surface du matériau de filtration modifié à l'étape (a) par dépôt chimique en phase vapeur comprenant la décomposition d'un organosilane trifonctionnel.

**6.** Procédé selon la revendication 5, dans lequel l'organosilane difonctionnel utilisé à l'étape (a) est un dialkylsilane ou un mélange de celui-ci.

**7.** Procédé selon la revendication 5 ou la revendication 6, dans lequel l'organosilane trifonctionnel utilisé à l'étape (b) est un trialkylsilane ou un mélange de celui-ci.

**8.** Procédé selon la revendication 6, dans lequel le dialkylsilane utilisé à l'étape (a) est un diméthylsilane.

**9.** Procédé selon la revendication 7, dans lequel le trialkylsilane utilisé à l'étape (b) est un triméthylsilane.

**10.** Procédé selon la revendication 5, comprenant en outre l'étape suivante après l'étape (a) mais avant l'étape (b) :

(a1) l'oxydation de ladite au moins une surface du matériau de filtration modifié à l'étape (a).

**11.** Procédé selon l'une quelconque des revendications 5 à 10, dans lequel le dépôt chimique en phase vapeur est sélectionné dans le groupe constitué du dépôt chimique en phase vapeur à la pression atmosphérique (APCVD), du dépôt chimique en phase vapeur à basse pression (LPCVD), du dépôt chimique en phase vapeur sous ultra-vide (UHVCVD), du dépôt chimique en phase vapeur en conditions de sous-alimentation (SRCVD), du dépôt chimique en phase vapeur par monocouches atomiques (ALCVD), et du dépôt chimique en phase vapeur assisté par plasma (PECVD).

**12.** Procédé selon la revendication 5, dans lequel le procédé utilisé à l'étape (a) est le dépôt chimique en phase vapeur en conditions de sous-alimentation (SRCVD).

**13.** Procédé de fabrication d'un matériau de filtration à surface modifiée, les atomes définissant la modification de surface comprenant le silicium, le carbone et l'hydrogène, le procédé comprenant :

(a) la formation d'un matériau de filtration ; et
(b) la modification de la surface du matériau de filtration par le procédé selon l'une quelconque des revendications 5 à 12.

**14.** Élément filtrant comprenant le matériau de filtration tel que défini dans l'une quelconque des revendications 1 à 4.

**15.** Élément filtrant selon la revendication 14, sélectionné dans le groupe constitué d'une cartouche, d'un écran, d'un cylindre, d'une feuille, d'un disque et d'une fritte.

**16.** Unité de filtration comprenant un élément filtrant selon la revendication 15 ou la revendication 16 et une structure de support.

**17.** Procédé de filtration d'un fluide, comprenant le fait de faire passer le fluide à travers un matériau de filtration selon l'une quelconque des revendications 1 à 4, un élément filtrant selon la revendication 14 ou 15, ou une unité de filtration selon la revendication 16.

**18.** Utilisation d'un matériau selon l'une quelconque des revendications 1 à 4 dans la filtration.

**19.** Utilisation d'un matériau selon l'une quelconque des revendications 1 à 4 dans la filtration dans une usine de gazéification.

Fig. 2

Fig. 1

Differential pressure/Unit flow vs. Hours of operation

Fig. 3

Contaminated filter - differential pressure vs. air flow rate

Fig. 4

Fig. 5

EP 3 380 213 B1

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011056550 A
- WO 2012047945 A
- GB 2394428 A
- US 20150306549 A
- US 5789024 A
- JP 61149210 A
- US 20120251797 A
- US 20130244025 A